# EUROPEAN PATENT APPLICATION

(11) **EP 4 819 263 A1**
(43) Date of publication of application: **07.10.2026**
(21) Application number: 26157875.1
(22) Date of filing: 11.02.2026
(51) Int. Cl.: H01M 10/02, H01M 50/342, H01M 50/553

(54) **RECHARGEABLE BATTERY**

(30) Priority: 01.04.2025 KR 20250042340
(71) Applicant: SAMSUNG SDI CO., LTD., Yongin-si, Gyeonggi-do 17084 (KR)
(72) Inventor: GUEN, Minhyung, 17084 Yongin-si (KR)
(74) Representative: Maiwald GmbH

(57) **Abstract**

A rechargeable battery includes a case and an electrode assembly accommodated in the case. A cap plate seals an opened portion of the case, and an electrode terminal is positioned to the cap plate and electrically connected to the electrode assembly. An insulating member is positioned between the electrode terminal and the cap plate to insulates the electrode terminal from the cap plate, with the insulating member sealing between the electrode terminal and the cap plate, and the insulating member being configured to partially rupture when a pressure inside the case exceeds a certain level.

## Description

### BACKGROUND OF THE DISCLOSURE

### (a) Field of the Disclosure

The present disclosure relates to a rechargeable battery.

### (b) Description of the Related Art

Rechargeable batteries are widely used in small devices such as portable electronic devices and also in medium and large-sized devices such as battery packs for hybrid vehicles or electric vehicles or electric power storage devices.

Such rechargeable batteries are power storing devices capable of being repeatedly charged and discharged. The batteries include a laminated structure of positive electrode/separator/negative electrode. Generally, the positive electrode contains lithium metal oxide as a positive electrode active material, and the negative electrode contains a carbon-based negative electrode active material such as graphite. Lithium ions discharged from the positive electrode are absorbed into the carbon-based negative electrode active material of the negative electrode when charging, and lithium ions contained in the carbon-based negative electrode active material are absorbed into the lithium metal oxide of the positive electrode when discharging. This configuration allows the charging and discharging to be repeated.

The electrode terminals of a polyhedral rechargeable battery may be provided at an upper surface of the case or at side surfaces of the case. In a rechargeable battery in which electrode terminals are on the sides of the case, it is common for a vent section, which is ruptured by the pressure generated inside the case, to be provided at the bottom of the case and adjacent to the electrode assembly. However, it is a problematic that when the pressure inside the case increases, the vent section deforms and the electrode assembly becomes deformed by the vent part, which causes a short circuit.

### SUMMARY OF THE DISCLOSURE

The present disclosure provides a rechargeable battery capable of preventing the electrode assembly from being damaged in a process of a part being ruptured by pressure inside the case.

However, the technical objects to be solved by the present disclosure are not limited to the above-described problems, and other problems solved by the present disclosure that are not mentioned will be clearly understood by a person of an ordinary skill in the art from the description below.

A rechargeable battery according to the present disclosure includes a case, an electrode assembly accommodated in the case, a cap plate sealing an opened portion of the case, an electrode terminal positioned to the cap plate and electrically connected to the electrode assembly, and an insulating member positioned between the electrode terminal and the cap plate to insulates the electrode terminal from the cap plate, with the insulating member sealing between the electrode terminal and the cap plate, and with the insulating member being configured to partially rupture when a pressure inside the case exceeds a certain level.

The insulating member may include a base portion having a penetration hole formed therein through which the electrode terminal extends; an recess portion recessed from a surface of the base portion that faces inside of the case; a rupture portion recessed from a surface of the base portion that faces outside of the case, the rupture portion being positioned opposite to the recess portion, and the rupture portion being configured to rupture when the pressure inside the case is higher than the certain level; and a discharge portion is formed in a part of a side surface of the base portion, with the discharge portion being configured to discharge gas moving through the rupture portion to outside of the rechargeable battery.

The insulating member may include a rupture pattern on a bottom surface of the recess portion, with the rupture portion being configured to facilitate rupturing of the rupture portion due to pressure inside the case.

The shape of the fracture pattern may be one of a plus (+) shape and a minus (-) shape.

The depth to which the rupture portion is recessed may be of 0.5 mm to 1.0 mm.

The depth to which the recess portion is recessed may be of 2.0 mm to 5.0 mm.

The discharge portion may have a slot shape.

A length of the discharge portion may correspond to a width of the rupture portion.

The level at which the rupture portion is ruptured may be 4 kgf/mm² to 10 kgf/mm².

The cap plate may include a second penetration hole formed in a portion that corresponds to the recess portion of the first insulating member.

The cap plate may include a protruding portion surrounding the circumference of the first insulating member and open at a portion corresponding to the discharge portion.

The first insulating member may be made of an insulating polymer resin.

The insulating polymer resin may be one of polypropylene (PP), polyphenylene sulfide (PPS), polyethersulfone (PES), and modified polyphenylene oxide (PPO).

The electrode terminal may include a first conductive member positioned outside of the case and to the first insulating member, and a second conductive member electrically connected to the electrode assembly and extending through the first insulating member, with the second conductive member being coupled to the first conductive member.

The rechargeable battery may include a lead tab provided inside the case and connecting the electrode assembly and the second insulating member.

The rechargeable battery may include a second insulating member positioned inside of the case and between the cap plate and the lead tab.

The second insulating member may be made of an insulating material.

The electrode terminal may include a first electrode terminal and a second electrode terminal.

The first electrode terminal may be a positive electrode, and the second electrode terminal may be a negative electrode.

The case may be hexahedral shaped.

A rechargeable battery according to the present disclosure can prevent deformation of the electrode assembly even if a part of the first insulating member is ruptured due to pressure inside the case. Therefore, it is possible to prevent short circuits from occurring in the electrode assembly.

A rechargeable battery according to an embodiment of the present disclosure can stably seal between a first insulating member cap plate and an electrode terminal and can electrically insulate the electrode terminal from the cap plate.

A conventional rechargeable battery includes both a gasket and a vent portion for sealing and insulation, but a rechargeable battery according to an embodiment of the present disclosure can implement sealing and insulation with a single first insulating member where the functions of a gasket and a vent portion are integrated. Accordingly, since the number of components constituting a rechargeable battery can be reduced, the rechargeable battery assembly process can be simplified. Therefore, productivity can be improved by shortening the manufacturing time of rechargeable batteries.

### BRIEF DESCRIPTION OF THE DRAWINGS

FIG. 1 is a perspective view of a rechargeable battery according to an embodiment of the present disclosure.
FIG. 2 is a cross-sectional view of the rechargeable battery of FIG. 1.
FIG. 3 is a perspective view of a part of an electrode terminal and the first insulating member included in the rechargeable battery of FIG. 1.
FIG. 4 is a perspective view of the first insulating member of FIG. 3 viewed from bottom.
FIG. 5 is an exploded perspective view of a part of the electrode terminal and the first insulating member of FIG. 3.
FIG. 6 is a cross-sectional view of a part of the electrode terminal and the first insulating member of FIG. 3.
FIG. 7 is a cross-sectional view illustrating a state in which the rupture portion of the first insulating member is ruptured.

### DETAILED DESCRIPTION OF THE EMBODIMENTS

Embodiments of the present disclosure are provided to explain the present disclosure for a person of an ordinary skill in the art. The embodiments may be modified in many different forms, and the scope of the present disclosure is not limited to the following embodiments. Rather, the embodiments are provided to further fulfill and complete the present disclosure, and to fully convey the idea of the present disclosure to a person of ordinary skill in the art.

In the drawings, the thickness and size of each layer may be exaggerated for clarity, and the same symbol in the drawings indicates the same element. As used in this specification, the term "and/or" includes any one of the listed items and any combination of one or more. In addition, the meaning of "connected" in this specification means not only the case where member A and member B are directly connected, but also the case where member A and member B are indirectly connected such that member C is interposed between member A and member B.

The terminology used in this specification is used to describe particular embodiments and is not intended to limit the present disclosure. As used in this specification, a singular form may include a plural form, unless the context clearly indicates otherwise. Also, in this specification, "comprise," "include," "comprising," or "including" is used for specifying the presence of only the shapes, numbers, steps, operations, members, elements, and/or groups thereof, but not for precluding the presence or addition of one or more other shapes, numbers, operations, members, elements and/or groups.

Although the terms of "first", "second", etc. are used to describe various members, components, regions, layers, and/or parts in this specification, it is obvious that these members, components, regions, layers, and/or parts should not be limited by these terms. These terms are used only for distinguishing one member, component, region, layer or part from another region, component, layer or part. Therefore, the "first" member, component, region, layer or part described below may refer to the "second" member, component, region, layer or part without departing from the teachings of the present disclosure.

Additionally, space-related terms such as "beneath," "below," "lower," "above," and "upper" may be used to facilitate understanding of one element or feature illustrating in drawings relative to another element or feature. These space-related terms are intended to facilitate understanding of the present disclosure in various process states or usage states of the present disclosure and are not intended to limit the present disclosure. For example, if an element or feature of a drawing is flipped, the element or feature described as "lower" or "below" becomes "upper" or "above". Therefore, "lower" is a concept that includes "upper" or "below".

Hereinafter, a rechargeable battery according to an embodiment of the present disclosure will be described.

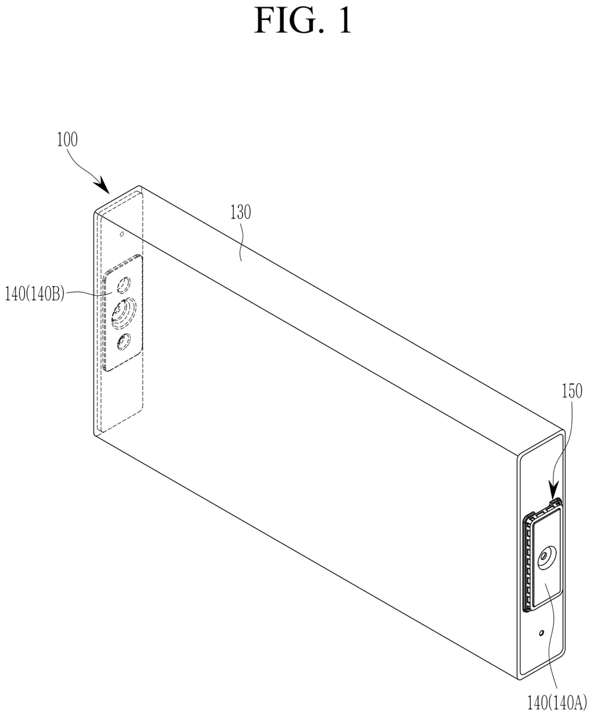

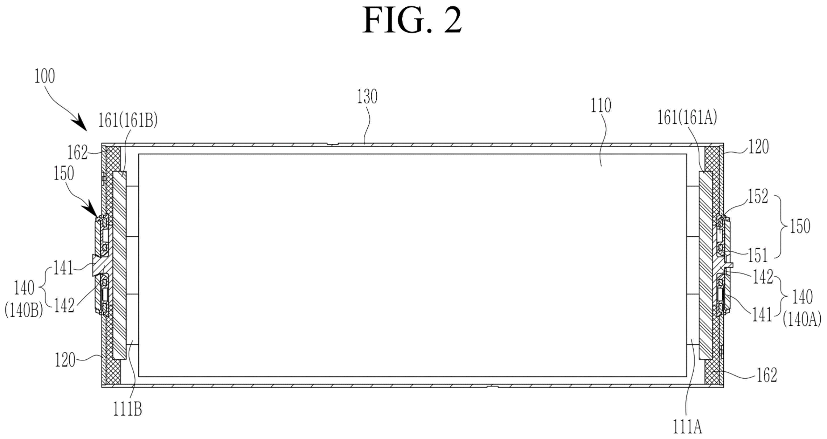

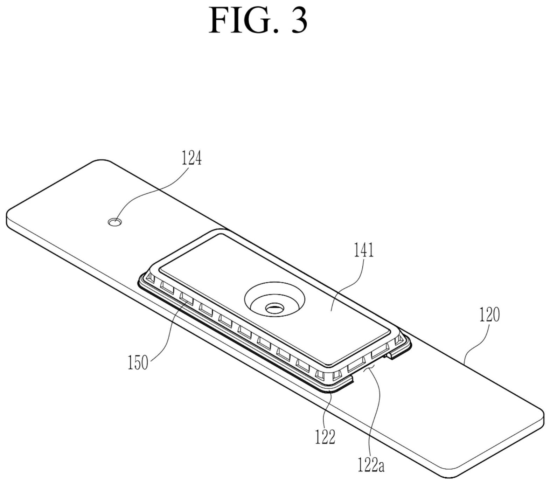

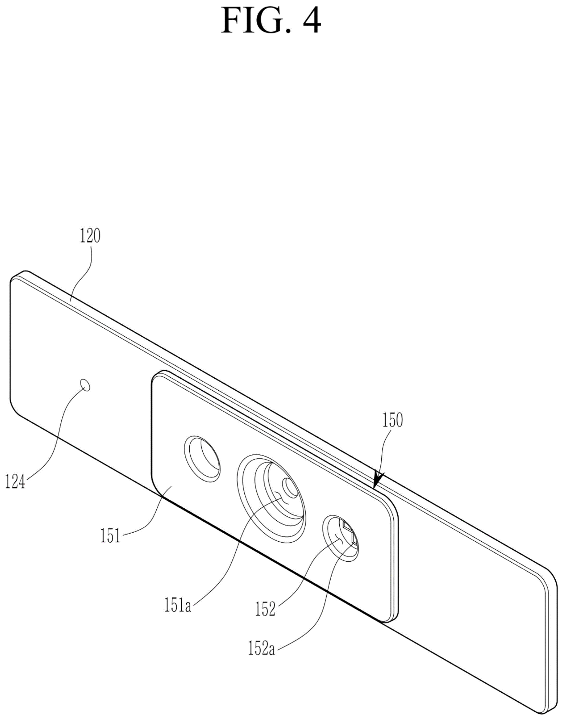

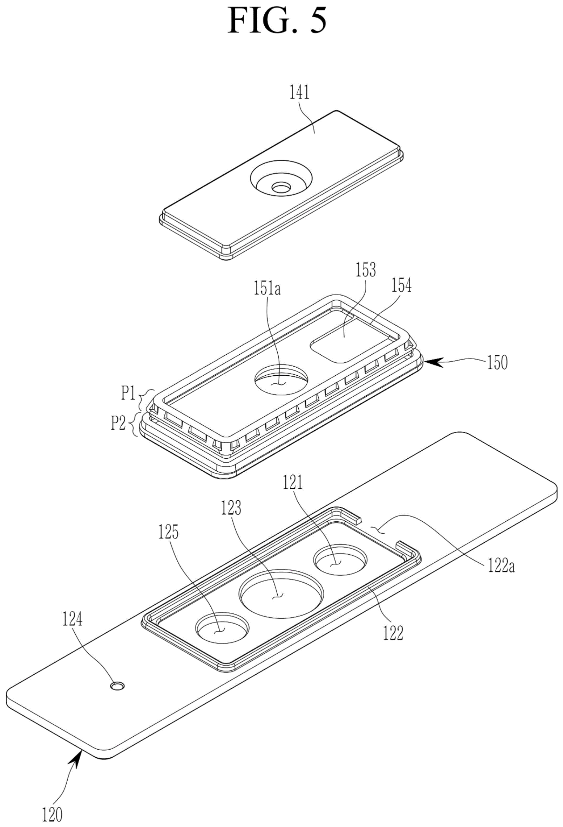

FIG. 1 is a perspective view of a rechargeable battery according to an embodiment of the present disclosure, FIG. 2 is a cross-sectional view of the rechargeable battery of FIG. 1, FIG. 3 is a perspective view of a part of an electrode terminal and the first insulating member included in the rechargeable battery of FIG. 1, FIG. 4 is a perspective view of the first insulating member of FIG. 3 viewed from bottom, and FIG. 5 is an exploded perspective view of a part of the electrode terminal and the first insulating member of FIG. 3.

Referring to FIGS. 1 to 5, a rechargeable battery 100 according to an embodiment of the present disclosure includes an electrode assembly 110, a case 130, a cap plate 120, an electrode terminal 140, and a first insulating member 150.

The electrode assembly 110 charges and discharges electric current. The electrode assembly 110 may be formed as a structure including a first electrode plate, a second electrode plate, and a separator that are wound or laminated. For example, the electrode assembly 110 may be a laminated type in which electrode plates are arranged to be laminated in multiple layers. Alternatively, the electrode assembly 110 may be a wound jelly-roll type.

The first electrode plate may include a first base tab 111A. If there are multiple first electrode plate, then multiple first base tab 111A are provided. A plurality of first base tabs 111A may be coupled together by welding methods such as laser, resistance welding and ultrasonic welding.

The second electrode plate may include a second base tab 111B. If there are multiple second electrode plates, then multiple second base tabs 111A are provided. A plurality of second base tabs 111B may be coupled together.

The separator (not shown) may be interposed between the first electrode plate and the second electrode plate. The separator prevents a short circuit between the first electrode plate and the second electrode plate and enables the movement of lithium ions. For this purpose, the separator may be made of a size relatively larger than the first electrode plate or the second electrode plate. Such separators may include, for example, a porous polymer film or a porous non-woven fabric. The porous polymer film may be formed in a single layer containing a polyolefin polymer such as an ethylene polymer, a propylene polymer, an ethylene/butene copolymer, an ethylene/hexene copolymer, and an ethylene/methacrylate copolymer, or multiple layers thereof.

The porous non-woven fabric may contain high melting point glass fibers and polyethylene terephthalate (polyethylene terephthalate) fibers. However, the present disclosure is not limited thereto and depending on the embodiment, the separator may be a high heat resistance separator including ceramic (e.g., a CCS, ceramic coated separator).

The case 130 accommodates the electrode assembly 110, and both sides of the case 130 are open. The electrode assembly 110 is accommodated in the case 130 together with electrolyte. The electrolyte may be injected through an electrolyte injection hole 124, and the electrolyte injection hole 124 may subsequently be sealed by a plug or sealing material.

The electrolyte may be non-aqueous electrolyte. The electrolytes may contain lithium salt and organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfo oxide (dimethyl sulfoxide), acetonitrile (acetonitrile), dimethoxyethane, diethoxyethane, sulfolane, gamma-butyrolactone, propylene sulfide, and tetrahydrofuran.

The electrode assembly 110 may be inserted into the case 130 through the open portion of the case 130.

The case 130 may be any one of pouch type, cylindrical type, and polyhedral type. In the present disclosure, an example of a polyhedral type case 130 will be described. The shape of the case 130 may be, for example, hexahedral.

The cap plate 120 closes and seals the open portion of the case 130. The cap plate 120 and the case 130 may be made of aluminum and coupled to each other by welding method. For example, the cap plate 120 may be coupled to the case 130 by laser welding method.

The first insulating member 150 (described more fully below) can be positioned in a middle portion of the cap plate 120.

The electrode terminal 140 is provided on the cap plate 120 and electrically connected to the electrode assembly 110. The electrode terminal 140 may include, for example, a first electrode terminal 140A and a second electrode terminal 140B.

The first electrode terminal 140A may be connected to the first electrode plate of the electrode assembly 110, and the second electrode terminal 140B may be connected to the second electrode plate of the electrode assembly 110. The first electrode plate may be a positive electrode, and the second electrode plate may be a negative electrode. Thus, the first electrode terminal 140A may be the positive electrode, and the second electrode terminal 140B may be the negative electrode. But a configuration with the opposite polarities is also possible.

The first electrode terminal 140A and the second electrode terminal 140B may be formed with the same structure inside the cap plate 120, and may be formed with partially different structures outside the cap plate 120. In the first electrode terminal 140A and the second electrode terminal 140B, the portions positioned outside the cap plate 120 may change depending on the design of the rechargeable battery 100. Thus, the battery 100 is not limited to specific structures.

The electrode terminal 140 may include, for example, a first conductive member 141 and a second conductive member 142.

The first conductive member 141 may be provided on a portion of the first insulating member 150 that is outside of the case 130. The first conductive member 141 may be a plate of which a part is penetrated.

The second conductive member 142 is electrically connected to the electrode assembly 110 and passes through the first insulating member 150 to be coupled with the first conductive member 141. More specifically, the second conductive member 142 is provided such that its middle portion protrudes and penetrates the first insulating member 150, and the second conductive member 142 may be coupled to the first conductive member 141 by a welding.

A rechargeable battery 100 according to an embodiment of the present disclosure may include a lead tab 161. The lead tab 161 is provided inside the case 130 and connects the electrode assembly 110 and the second conductive member 142. More specifically, the lead tab 161 may include the first lead tab 161A and the second lead tab 161B. The first lead tab 161A connects the first base tab 111A and the second conductive member 142 of the first electrode terminal 140A. The second lead tab 161B connects the second conductor tab and the second conductive member 142 of the second electrode terminal 140B.

The shape of the lead tab 161 may vary depending on the design of the rechargeable battery 100, and, thus, the lead tab 161 is not limited to a specific shape.

The first insulating member 150 is provided between the electrode terminal 140 and the cap plate 120. The first insulating member 150 insulates the electrode terminal 140 from the cap plate 120 and seals between the electrode terminal 140 and the cap plate 120. Also, the first insulating member 150 may be partially ruptured if the pressure inside the case 130 exceeds a certain level. The first insulating member 150 may include, for example, a base portion 151, a recess portion 152, a rupture portion 153, and a discharge portion 154.

A first penetration hole 151a is formed in the base portion 151 through which the electrode terminal 140 extends. The cap plate 120 may include a first coupling hole 123 positioned to corresponding to the first penetration hole 151a of the base portion 151. A center of the first coupling hole 123 may be align with a center of the first penetration hole 151a, and the first coupling hole 123 may be formed with a diameter that is larger than a diameter of the first penetration hole 151a.

For convenience in assembling the rechargeable battery 100, the base portion 151 may be manufactured as two unit members P1 and P2 that are coupled together. The first unit member P1 may be positioned outside the case 130, and the second unit member P2 may be positioned inside the case 130.

The cap plate 120 may further include a second coupling hole 125. The second coupling hole 125 is formed to correspond to a part of the base portion 151. In the process of installing the base portion 151 to the cap plate 120 a part of the first unit member P1 penetrates the first coupling hole 123 and the second coupling hole 125. Then, adhesive material may be applied to a portion of the first unit member P1 that is in contact with the second unit member P2.

When the second unit member P2 is provided on the cap plate 120 in contact with the first unit member P1, assembly of the base portion 151 and the cap plate 120 may be completed. In this way, the base portion 151 penetrates both the first coupling hole 123 and the second coupling hole 125 of the cap plate 120 so that the coupling strength with the cap plate 120 can be further improved.

However, the method of installing the base portion 151 on the cap plate 120 is not limited to the above-described method. For example, in other embodiments, it is possible to manufacture the base part portion by a double injection method where the cap plate 120 is provided in a mold.

The recess portion 152 is recessed from a surface of the base portion that faces the inside of the case 130. The depth to which the recess portion 152 is recessed may be, for example, within a range of 2.0 mm to 5.0 mm.

Meanwhile, the cap plate 120 may include a second penetration hole 121. The second penetration hole 121 may be positioned to correspond to the recess portion 152 of the first insulating member 150 in the cap plate 120. The second penetration hole 121 may have a diameter that is larger than a diameter of the recess portion 152.

The rupture portion 153 is recessed from a surface of the base portion 151 that faces the outside the case 130. The depth to which the rupture portion 153 is recessed may be within a range of 0.5 mm to 1.0 mm.

The rupture portion 153 is positioned at the opposite side of the recess portion 152 in the base portion 151, and the rupture portion 153 is configured to rupture when the pressure inside the case 130 exceeds a certain level. The pressure at which the rupture portion 153 is ruptured may be within a range of 4 kgf/mm² to 10 kgf/mm².

The pressure at which the rupture portion 153 ruptures may be set at various values depending on the design of the rechargeable battery 100. For example, the pressure at which the rupture portion 153 ruptures may be adjusted by varying the depth of the rupture portion 153. By deepening the depth of the rupture portion 153 to make the thickness of a portion between the rupture portion 153 and the recess portion 152 thinner, the rupture portion 153 can be ruptured at a relatively low pressure. Conversely, by decreasing the depth of the rupture portion 153 to make the thickness of a portion between the rupture portion 153 and the recess portion 152 thicker, the rupture portion 153 can be ruptured at a relatively high pressure value.

The discharge portion 154 is formed into a part of the side surface of the base portion 151 and discharges gas moving through the rupture portion 153 to outside of the battery. The discharge portion 154 may have a slot shape. The length of the slot shaped discharge portion 154 may correspond to a width of the rupture portion 153.

The cap plate 120 may include a protruding portion 122. The protruding portion 122 may be configured to surround a circumference of the first insulating member 150, and a part of the protruding portion 122 corresponding to the discharge portion 154 may be open.

More specifically, the protruding portion 122 may have a line shape and may protrude from a surface facing outward. The protruding portion 122 may have a shape corresponding to the circumference of the first insulating member 150. As such, the protruding portion 122 can increase the bonding strength between the first insulating member 150 and the cap plate 120 and improve the sealing strength between the cap plate 120 and the first insulating member 150.

The protruding portion 122 may be formed such that a portion 122a corresponding to the discharge portion 154 is opened. Accordingly, the gas discharged from the discharge portion 154 can be quickly discharged to outside through the open portion of the protruding portion 122.

The first insulating member 150 as described above may stably seal between the cap plate 120 and the electrode terminal 140 to prevent electrolyte leakage. And the first insulating member 150 may electrically insulate the electrode terminal 140 from the cap plate 120. Also, the rupture portion 153 of the first insulating member 150 may rupture if the pressure inside the case 130 exceeds a certain level. Therefore, even if a separate vent section is not provided in the cap plate 120 as in a conventional rechargeable battery, explosion of the rechargeable battery 100 due to pressure inside the case 130 can be prevented.

The first insulating member 150 may include a rupture pattern 152a. The rupture pattern 152a may be on the bottom surface of the recess portion 152. The rupture pattern 152a may be recessed more than a surface of the base portion. This rupture pattern 152a can facilitate rupture of the rupture portion 153 due to pressure inside the case 130. The shape of the rupture pattern 152a for this purpose may be, for example, one of a plus (+) shape and a minus (-) shape. But the present disclosure is not limited to such shapes.

The first insulating member may be made of insulating polymer resin. The insulating polymer resin may be selected from polypropylene (PP), polyphenylene sulfide (PPS), polyether sulfone (PES), and modified polyphenylene oxide (PPO). PPS has excellent heat resistance, dimensional stability, chemical resistance, low absorption, and nonflammability, and its electric characteristics change little in response to temperature changes. PES is a non-crystalline aromatic resin with heat resistance of 200°C, and PES has excellent dimensional stability and water resistance. Also, PES has good transparency, a high glass transition temperature (Tg: 223°C), a low expansion property (CTE: 2.3x10-5/°C), and excellent mechanical strength. Modified PPO is nonflammable resin with excellent mechanical properties, heat resistance, has a small deterioration of properties even at low temperatures, and has small shrinkage when molded.

The rechargeable battery 100 according to an embodiment of the present disclosure may include a second insulating member 162. The second insulating member 162 is provided inside the case 130 and between the cap plate 120 and the lead tab 161. The second insulating member 162 can prevent the cap plate 120 and lead tab 161 from being electrically connected. Also, the second insulating member 162 can fix the position of the lead tab 161. The second insulating member 162 is made of insulating material. For example, the second insulating member 162 may be, non-woven fabric or plastic, but the present disclosure is not limited thereto.

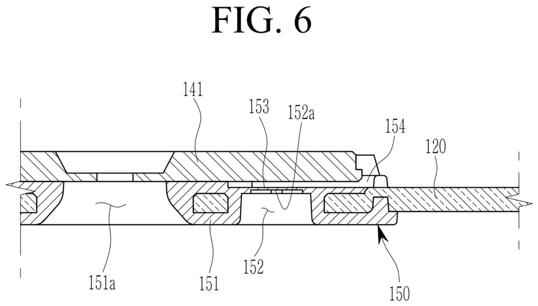

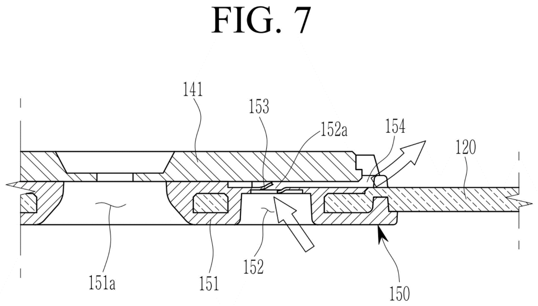

FIG. 6 is a cross-sectional view illustrating a part of the electrode terminal and the first insulating member of FIG. 3, and FIG. 7 is a cross-sectional view illustrating a state where the rupture portion 153 of the first insulating member is ruptured.

Referring to FIG. 6, if the pressure inside the case 130 is less than a certain level, the rupture portion 153 maintains an initial shape. And, as shown in FIG. 7, if the pressure inside the case 130 is higher than the certain level, the rupture portion 153 is ruptured. Since the rupture portion 153 is positioned between the electrode terminal 140 and the cap plate 120, which are made of metallic material, the electrode assembly 110 is not deformed even if a rupture occurs.

A rechargeable battery 100 according to an embodiment of the present disclosure as described above can prevent deformation of the electrode assembly 110 even if a part of the first insulating member 150 is ruptured by pressure inside the case 130. Therefore, it is possible to prevent short circuits from occurring in the electrode assembly 110.

Also, a rechargeable battery 100 according to an embodiment of the present disclosure can stably seal between a cap plate 120 and an electrode terminal 140 by the first insulating member 150 and also electrically insulate the electrode terminal 140 from the cap plate 120.

A conventional rechargeable battery includes both a gasket and a vent portion for sealing and insulation, but a rechargeable battery 100 according to an embodiment of the present disclosure can implement sealing and insulation with a single first insulating member 150 where functions of the gasket and vent portion are integrated. Accordingly, since the number of components constituting a rechargeable battery 100 can be reduced, the rechargeable battery assembly process can be simplified. Therefore, productivity can be improved by shortening the manufacturing time of rechargeable batteries 100.

Although various embodiments of the present disclosure have been described above, the embodiments are merely exemplary and do not limit the meaning or the scope of the present disclosure.

### <Description of symbols>

| | | | |
|---|---|---|---|
| 100: | rechargeable battery | 110: | electrode assembly |
| 120: | cap plate | 121: | second penetration hole |
| 122: | protruding portion | 123: | first coupling hole |
| 124: | electrolyte injection hole | 125: | second coupling hole |
| 130: | case | 140: | electrode terminal |
| 141: | first conductive member | 142: | second conductive member |
| 150: | first insulating member | 151: | base portion |
| 151a: | first penetration hole | 152: | recess portion |
| 152a: | rupture pattern | 153: | rupture portion |
| 154: | discharge portion | 161: | lead tab |
| 162: | second insulating member | | |

## Claims

1. A rechargeable battery (100) comprising:
a case (130);
an electrode assembly (110) accommodated in the case (130);
a cap plate closing and sealing an open portion of the case (130);
an electrode terminal (140) positioned to the cap plate (120) and electrically connected to the electrode assembly (110); and
an insulating member (150) positioned between the electrode terminal (140) and the cap plate (120) to insulate the electrode terminal (140) from the cap plate (120), the insulating member (150) sealing between the electrode terminal (140) and the cap plate (120), and the insulating member (150) being configured to partially rupture when the pressure inside the case (130) exceeds a certain level.

2. The rechargeable battery (100) of claim 1, wherein the insulating member (150) comprises a base portion (151) having a first penetration hole (151a) formed therein through which the electrode terminal (140) extends,
wherein a recess portion (152) recessed from a surface of the base potion that faces an inside of the case (130),
wherein a rupture portion (153) formed to be recessed from a surface of the base portion (151) that faces outside of the case (130), the rupture portion (153) being positioned opposite to the recess portion (152), and the rupture portion (153) being configured to rupture when the pressure inside the case (130) exceeds the certain level, and
wherein a discharge portion (154) is formed in a part of a side surface of the base portion (151), with the discharge portion (154) being configured to discharge gas moving through the rupture portion (153) to outside of the rechargeable battery (100).

3. The rechargeable battery (100) of claim 2, wherein the insulating member (150) further comprises a rupture pattern (152a) on a bottom surface of the recess portion (152), with the rupture pattern (152a) being configured to facilitate rupturing of the rupture portion (153) due to pressure inside the case (130);
wherein preferably a shape of the rupture pattern (152a) is one of a plus shape and a minus shape.

4. The rechargeable battery (100) of claim 2 or 3, wherein a depth to which the rupture portion (153) is recessed from the surface of the base portion (151) is of 0.5mm to 1.0mm.

5. The rechargeable battery (100) of any one of the claims 2 to 4, wherein a depth to which the recess portion (152) is recessed from the surface of the base portion (151) is 2.0mm to 5.0mm.

6. The rechargeable battery (100) of any one of the claims 2 to 5, wherein the discharge portion (154) has a slot shape;
wherein preferably a length of the discharge portion corresponds to a width of the rupture portion (153).

7. The rechargeable battery (100) of any one of the claims 2 to 6, wherein the level at which the rupture portion (153) is ruptured is 4 kgf/mm² to 10 kgf/mm².

8. The rechargeable battery (100) of any one of the claims 2 to 7, wherein the penetration hole is a first penetration hole (151a), and
wherein the cap plate (120) comprises a second penetration hole (121) formed in a portion that corresponds to the recess portion (152) of the insulating member (150).

9. The rechargeable battery (100) of any one of the claims 2 to 8, wherein the cap plate (120) comprises a protruding portion (122) surrounding a circumference of the insulating member (150) and open at a portion corresponding to the discharge portion (154).

10. The rechargeable battery (100) of any one of the preceding claims, wherein the insulating member (150) is made of insulating polymer resin;
wherein preferably the insulating polymer resin is one of polypropylene (PP), polyphenylene sulfide (PPS), polyether sulfone (PES), and modified polyphenylene oxide (PPO).

11. The rechargeable battery (100) of any one of the preceding claims, wherein the electrode terminal (140) comprises:
a first conductive member (141) installed positioned outside of the case (130) and to the insulating member (150); and
a second conductive member (142) electrically connected to the electrode assembly (110) and extending through the insulating member (150), with the second conductive member (142) being coupled to the first conductive member (141).

12. The rechargeable battery (100) of claim 11, wherein a lead tab (161, 161A, 161B) provided inside the case (130) and connects the electrode assembly (110) and the second conductive member (142).

13. The rechargeable battery (100) of claim 12, wherein the insulating member (150) is a first insulating member (150), and
wherein the rechargeable battery (100) further comprises a second insulating member (162) positioned inside of the case (130) and between the cap plate (120) and the lead tab (161, 161A, 161B);
wherein preferably the second insulating member (162) is made of insulating material.

14. The rechargeable battery (100) of any one of the preceding claims, wherein the electrode terminal (140) comprises a first electrode terminal (140A) and a second electrode terminal (140B);
wherein preferably the first electrode terminal (140A) is a positive electrode and the second electrode terminal (140B) is a negative electrode.

15. The rechargeable battery (100) of any one of the preceding claims, wherein the case (130) is hexahedral shaped.
